# DEMANDE DE BREVET EUROPEEN

(11) **EP 0 534 851 A1**
(43) Date de publication de la demande: **31.03.1993**
(21) Numéro de dépôt: 92402618.0
(22) Date de dépôt: 24.09.1992
(51) Int. Cl.: G02B 7/182, B23K 26/02

(54) **Dispositif de positionnement et de tenue de miroir**

(30) Priorité: 24.09.1991 FR 9111731
(71) Demandeur: B.M. INDUSTRIES, F-91000 Evry (FR)
(72) Inventeur: Treton, Jean-Pierre, F-91090 Lisses (FR)
(74) Mandataire: Leszczynski, André

(57) **Abrégé**

L'invention est relative à un dispositif de positionnement et de tenue de miroir à réfléchir la lumière, par exemple dans un système optique de type laser, avec une monture de miroir constituée par une cassette (2) amovible disposée dans un boitier (1) fixe, ce dispositif comportant, d'une part, un dispositif d'orientation du miroir (17) et d'autre part, un dispositif (13) d'appui du miroir sur une surface de référence (38).

Il comporte des moyens isolant totalement l'un de l'autre le dispositif d'orientation du miroir et son dispositif d'appui.

## Description

La présente invention concerne un dispositif de positionnement et de tenue de miroir à réfléchir la lumière, utilisé par exemple dans un système optique du type laser.

De tels système exigent une maintenance pouvant nécessiter le contrôle fréquent et/ou le remplacement rapide d'un miroir

Afin d'opérer de telles manipulations sans modifier la position de la surface réfléchissante du miroir de manière à éviter la nécessité d'un réglage de celle-ci, on a proposé de disposer les miroirs dans des cassettes qui soient identiques et donc interchangeables. Ainsi, un nettoyage, un contrôle ou un changement de miroir peuvent-ils être effectués sans réglage, et donc par un opérateur n'ayant pas de formation particulière.

A cet effet, un boîtier, fixe dans l'installation du système optique, porte un miroir articulé dans lequel peut se glisser une cassette porte-miroir parallélépipédique. Le tiroir est ensuite rabattu sur le boîtier jusqu'à ce que la surface réfléchissante du miroir vienne en appui sur trois point réglables appartenant au boîtier. Il est alors verrouillé dans cette position par un ergot articulé.

Un tel dispositif, s'il présente de grands avantages par rapport aux miroirs non montés sur cassettes interchangeables, présente cependant un certain nombre d'inconvénients.

Tout d'abord, il comporte deux systèmes élastiques qui se contrarient. En effet, d'une part, il existe un premier système élastique pour régler la surface, en l'occurrence constituée par trois points, sur laquelle vient s'appuyer le miroir pour être dans la position voulue, et d'autre part, un deuxième système élastique situé derrière le miroir et assurant son appui souple sur la dite surface. Or ces deux systèmes travaillent en opposition et sont donc en équilibre instable, ce qui se traduit, dans le temps, par un risque non négligeable de déréglage de la surface réfléchissante et on sait que l'on doit éviter toute modification, si faible soit-elle, de la trajectoire du faisceau lumineux puisque le réglage de cette trajectoire est de l'ordre du centième de degré.

D'autres inconvénients sont dûs au fait que le réglage se fait à l'avant de la cassette. Tout d'abord cela signifie que l'opérateur effectuant une manipulation de cassette se trouve dans une zone sensible et qu'il doit prendre un certain nombre de précautions pour éviter le risque d'être en contact avec un faisceau, notamment parce que le réglage se fait par devant, dans le champ de propagation de la lumière.

Par ailleurs l'opération de réglage exige une gymnastique mentale certaine puisque l'opérateur ne voit pas les organes qu'il manoeuvre.

On citera enfin comme inconvénients, la complexité mécanique du tiroir et de son dispositif de verrouillage.

La présente invention a pour but de remédier à ces inconvénients.

Elle a pour un objet un dispositif de positionnement et de tenue de miroir à réfléchir la lumière, utilisé, par exemple, dans un système optique du type laser, la monture du dit miroir étant constituée par une cassette amovible, un tel dispositif comportant un dispositif élastique permettant de régler la surface sur laquelle vient s'appuyer la surface réfléchissante du miroir, dispositif élastique qui sera appelé, dans le présent texte "dispositif d'orientation du miroir", tandis que la surface sur laquelle le miroir s'appuie sera appelée "surface de référence", et un dispositif élastique assurant l'appui souple du miroir sur la dite surface, qui sera appelé "dispositif d'appui du miroir", le dispositif de positionnement et de tenue du miroir étant caractérisé en ce qu'il comporte des moyens isolant totalement l'un de l'autre le dispositif d'orientation du miroir et son dispositif d'appui de manière à éviter les risques d'instabilité dans le réglage par une interaction entre eux.

Selon une autre caractéristique de l'invention, ces moyens consistent à positionner le dispositif d'orientation du miroir de telle manière que la surface de référence soit en butée à l'encontre de l'action du dispositif d'appui du miroir, la dite surface de référence étant même éventuellement bloquée dans les deux sens, en position fixe, entre deux réglages successifs, et dans une réalisation préférée, la commande du dispositif d'orientation du miroir est disposée sur la partie mobile de ce dispositif.

Une autre caractéristique intéressante de l'invention consiste en ce que les organes de commande du dipositif d'orientation du miroir sont situés côté cassette, ce qui présente l'avantage de pouvoir les rendre accessibles sans risque, même lorsque le système optique est en phase opérative.

Suivant une autre caractéristique de l'invention, la cassette est cylindrique, ce qui présente un triple intérêt : de première part, elle facilite l'accessabilité des organes de commande du dispositif d'orientation du miroir, de deuxième part, son usinage est plus économique que celui d'une cassette parallélépipédique, et de troisième part, sa fixation peut être obtenue par un système d'accrochage très simple, comme un système à bayonnette, ce qui ne permet pas une forme parallélépipédique.

Une autre caractéristique consiste à maintenir le miroir sur la monture par un joint torique latéral écrasé obliquement qui laisse libre 100% de la surface réfléchissante du miroir, ce qui permet, entre autres, un nettoyage facile et total de la dite surface réfléchissante.

L'invention permet également de réaliser un dispositif de positionnement et de tenue d'un miroir à réfléchir assurant, lorsque la cassette est enlevée, le passage direct de la lumière, sans occultation même partielle, ce qui représente une caractéristique intéressante lors de manipulations particulière telles que contrôle ou analyse du flux lumineux.

Dans une variante également intéressante de l'invention, les organes de commande du dispositif d'orientation du miroir s'accompagnent d'indications illustrant les modifications de faisceaux obtenues par les différentes actions sur ces dits organes de commande, et "lisibles" quelle que soit la position angulaire du dispositif.

D'autres caractéristiques et avantages apparaîtront au cours de la description qui va suivre en relation avec les plans joints donnant, à titre purement indicatif et nullement limitatif, un exemple de réalisation de la présente invention.

La figure 1 est une coupe médiane d'un dispositif selon l'invention.

La figure 2 est une vue extérieure, suivant les lignes II-II, de la figure 1.

La figure 3 donne un détail à plus grande échelle.

Le dispositif illustré comprend essentiellement un boîtier 1, une cassette 2 et une pièce de référence 3.

Le boîtier 1 est constitué d'un corps 4 et d'un cache 5.

Le corps 4 est de forme prismatique avec ses deux flancs 6 et 7 formant un angle de 90° entre eux, et deux perforations 8 et 9 dont les axes sont perpendiculaires à la fois entre eux et par rapport aux flancs 6 et 7.

Le cache 5 comporte trois encoches 10 disposées à 120° l'une de l'autre.

La cassette 2 est composée d'un couvercle 11, d'une chambre 12, d'un ressort 13, d'une entretoise 14, d'un joint 15, d'un porte-joint 16 et d'un miroir 17.

Le couvercle 11 est composée d'un fond 18 amovible comportant deux lumières 19 et 20 et d'une virole 24 portant trois ergots 25 disposés, comme les encoches 10, à 120° l'un de l'autre.

La partie inférieure de la chambre 12 est filetée et sa partie supérieure porte deux embouts 21 et 22 destinés à mettre l'intérieur de la chambre avec un liquide réfrigérant lorsque besoin est.

Le ressort 13, en prenant appui sur le fond 18 du couvercle 11, exerce une poussée sur la chambre 12, et donc sur les pièces qui en sont solidaires, notamment le miroir 17. Cette poussée s'exerce axialement par rapport à la chambre 12, le ressort 13 se comportant par ailleurs comme une rotule entre celle-ci et le couvercle 11.

L'entretoise 14, le porte-joint 16 et le joint 15 forment un tout dont le rôle est de maintenir en place le miroir 17 sans prendre appui sur sa surface réfléchissante. A cette effet, le porte-joint 16, qui est vissé sur la partie inférieure filetée de la chambre 12, possède un talon 23 dont la face supérieure est inclinée vers le centre du porte-joint. Sur cette face inclinée, est disposé dans le joint 15. Par ailleurs, l'entretoise 14 est montée à glissement doux à l'intérieur du porte joint 16, de manière que, lorsque le porte-joint 16 est vissé sur la chambre 12, l'entretoise 14 soit progressivement repoussée par la partie inférieure de la chambre 12, sur le joint 15, et que celui-ci soit alors progressivement comprimé entre l'entretoise et la face inclinée du talon 23 du porte-joint 16.

Cette compression provoque une déformation du joint 15 qui s'appuye ainsi sur le pourtour du miroir 17 et le maintien en place sans qu'il soit besoin de prendre appui sur sa surface réfléchissante, ce qui permet d'utiliser celle-ci à 100%.

La pièce de référence 3 portant la surface de référence 38 qui définit la position exacte de la surface réfléchissante du miroir 17 est portée par un dispositif classique de positionnement comportant trois appuis ; un appui "point" 26 qui permet seulement un réglage de l'écartement entre le corps 4 et la pièce de référence 3, un appui "trait" 27 qui permet de régler le même écartement, mais avec un déplacement simultané de son point de contact suivant une ligne passant par l'appui "point"26, et un appui "plan" 28 qui permet également le même réglage d'écartement, mais avec déplacement simultané de son point de contact avec la pièce d'appui 3 pour tenir compte des deux autres réglages.

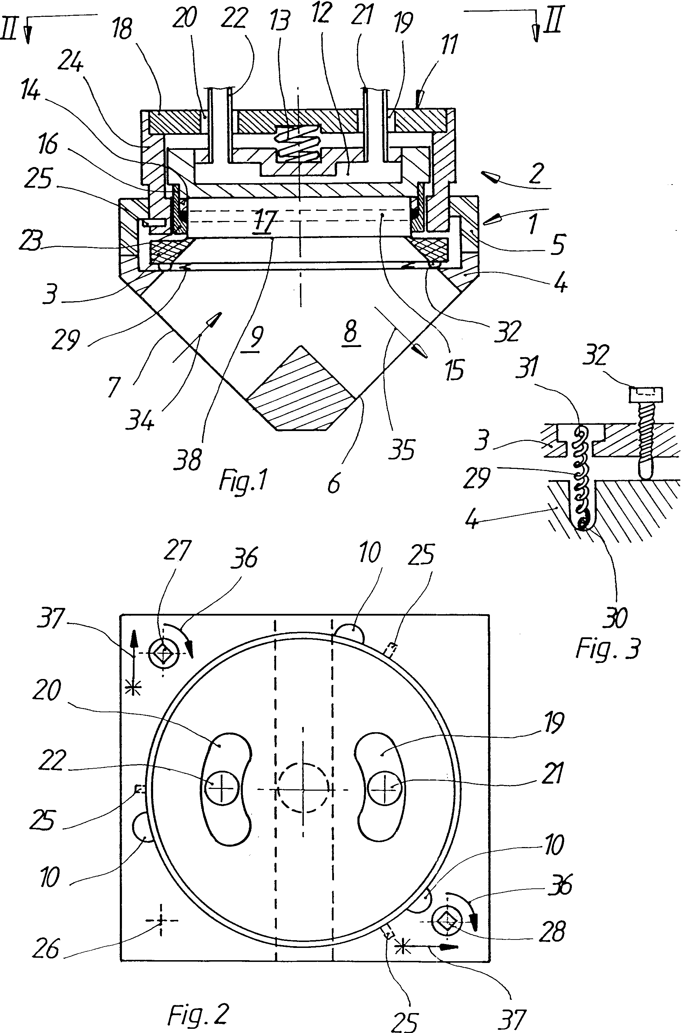

Chacun de ces appuis est réglable et le système de réglage utilisé est illustré à la figure 3.

Il comprend, d'une part, un ressort 29 travaillant en traction et dont une extrémité est tenue par une goupille 30 solidaire du corps 4 du boîtier 1, l'autre extrémité étant tenue par une goupille 31 solidaire de la pièce de référence 3, et d'autre part, une vis 32 qui, si elle est disposée sur la pièce de référence 3, s'appuie cependant sur le corps 4, permettant ainsi de régler l'écartement entre ces deux pièces 3 et 4.

Généralement, l'appui "point" est réglé une fois pour toutes au montage. C'est pourquoi, sur l'appareil illustré, seuls les appuis "trait" et "plan" sont accessibles et munis de vis avec un creux carré pour en permettre la manoeuvre.

On notera, d'ailleurs, que cette manoeuvre est facilitée par le fait que les têtes des vis 32 se trouvent à l'arrière du miroir et sont donc d'un accès non seulement aisé, mais également sans risque même lorsque l'installation est en phase opérative.

On notera aussi qu'elle est également facilitée par la présence, près des deux vis de l'appui "trait" 27 et de l'appui "plan" 28, de deux flèches dont l'une 36, courbe, représente le déplacement angulaire des vis 32, et dont l'autre 37, rectiligne avec un symbole lumineux comme empennage, représente la modification de la trajectoire du faisceau découlant du dit déplacement angulaire des vis 32.

Dans ces conditions, lorsque la cassette 2 est en place, le ressort 13 a une double action. d'une part, il assure le verrouillage du couvercle 11 en appuyant les ergots 25 sur le rebord intérieur du cache 5. D'autre part, il applique le miroir 17 sur la surface de référence 38, et cela même si cette surface de référence n'est pas rigoureusement perpendiculaire à l'axe du couvercle 11, grâce au fait que le dit ressort 13 se comporte comme une rotule entre le dit couvercle 11 et la chambre 12.

L'appui du miroir 17 se fait sur une surface de référence 38 fixe puisque les vis 32 qui positionnent la pièces de référence 3 sont en butée contre le corps 4 du boîtier 1 grâce à la traction exercée par les ressorts 29. Ainsi n'y-t-il aucune interaction entre le ressort 13 du dispositif d'appui du miroir et les ressorts 29 du dispositif d'orientation du miroir.

En marche, le faisceau entrant (flèche 34) est réfléchi (flèche 35) par le miroir 17 suivant la position de la surface de référence de la pièce de référence 3.

Pour avoir accès au miroir, on retire la cassette 2. Pour cela, il suffit de faire tourner le couvercle 11 dans le sens des aiguilles d'une montre jusqu'à ce que les ergots 25 arrivent au droit des encoches 10 du cache 5. On notera que les lumières 19 et 20 permettent de faire tourner le couvercle 11 sans modifier la position angulaire de la chambre 12, ni donc celle du miroir 17, de manière à ne pas risquer d'abîmer la surface réfléchissante du dit miroir par frottement sur la surface de référence.

S'il y a lieu de procéder à certaines manipulations telles que contrôle ou analyse du flux lumineux, elles seront facilitées par le passage du faisceau d'entrée (flèche 34) qui sort du boîtier 1 par l'emplacement du miroir 17 sans aucune occultation même partielle.

S'il y a lieu de changer de miroir, il suffit de placer une nouvelle cassette identique avec son miroir dans le boîtier 1 : le faisceau sera également identique.

S'il y a lieu seulement de nettoyer le miroir, il est possible d'utiliser la méthode, simple à mettre en oeuvre et efficace, de la feuille humectée, puisqu'il n'y a, au niveau de la surface réfléchissante du miroir 17, aucun relief s'opposant à ce mode de nettoyage.

Il est entendu que l'on peut, sans sortir de l'invention, modifier des détails de construction ou de fonctionnement en vue d'obtenir les mêmes résultats.

Par exemple, la forme géométrique du boîtier 1 pourrait être différente et notamment cylindrique, éventuellement avec une seule ouverture en lieu et place des perforations 8 et 9, par exemple si l'on est dans un cas de figure où l'angle de réflexion du faisceau doit être réglable dans une certaine plage.

Dans certains cas, il peut être préférable de toujours donner au miroir 17 une même position angulaire. Il suffit alors de décaler angulairement une encoche 10 ainsi qu'un ergot 25 pour qu'une seule position soit possible.

On pourrait aussi équiper le dispositif objet de l'invention d'une sécurité signalant, par exemple sur un tableau central, la présence et/ou l'absence du miroir et de sa cassette, ainsi que d'un détecteur thermique capable de signaler toute élévation de température liée à une anomalie dans la forme ou la position du faisceau d'entrée.

## Revendications

**1 -** Dispositif de positionnement et de tenue de miroir à réfléchir la lumière, par exemple dans un système optique de type laser, avec une monture de miroir constituée par une cassette amovible disposée dans un boîtier fixe, ce dispositif comportant, d'une part, un dispositif d'orientation du miroir et d'autre part, un dispositif d'appui du miroir sur une surface de référence, caractérisé en ce que la surface de référence (38) est réalisée sur une pièce de référence (3) interposée entre le miroir (17) et le corps (4) du boîtier (1), le dispositif d'orientation du miroir comprenant des moyens (29,32) de réglage de l'écartement entre ladite pièce de référence (3) et ledit corps (4), lesdits moyens de réglage étant indépendants dudit dispositif d'appui (12,13) du miroir.

**2 -** Dispositif suivant la revendication 1, caractérisé en ce que lesdits moyens de réglage sont agencés de telle manière que ladite surface de référence (38) soit en butée à l'encontre de l'action du dispositif d'appui (12,13) du miroir.

**3 -** Dispositif suivant la revendication 2, caractérisé en ce que lesdits moyens de réglage sont agencés de telle manière que la surface de référence (38) soit bloquée en position fixe entre deux réglages successifs.

**4 -** Dispositif suivant l'une quelconque des revendications 2 et 3, caractérisé en ce que les moyens de réglage comprennent des vis (32) montées sur ladite pièce de référence (3) et maintenues en appui contre ledit corps (4) par des ressorts de traction (29) solidaires de ladite pièce de référence (3) et dudit corps (4).

**5 -** Dispositif suivant la revendication 4, caractérisé en ce que les têtes desdites vis (32) sont situées côté cassette (2) de façon à être directement accessibles par l'utilisateur.

**6 -** Dispositif suivant l'une quelconque des revendications précédentes, caractérisé en ce que la cassette (2) portant le miroir (17) est cylindrique.

**7 -** Dispositif suivant l'une quelconque des revendications précédentes, caractérisé en ce que la cassette (2) est verrouillée sur le boîtier (1) au moyen d'ergots (25) disposés sur la cassette et coopérant avec une pièce (5) du boîtier fixe.

**8 -** Dispositif suivant l'une quelconque des revendications précédentes, caractérisé en ce que le dispositif d'appui (12,13) du miroir comporte un ressort ( ) en appui contre le fond (18) de la cassette et exerçant une poussée au centre de la surface réfléchissante du miroir (17).

**9 -** Dispositif suivant l'une quelconque des revendications précédentes, caractérisé en ce que le miroir (17) est tenu dans la cassette (2) par un joint torique latéral (15) comprimé obliquement.

**10 -** Dispositif suivant l'une quelconque des revendications précédentes, caractérisé en ce que le boîtier fixe (1) comporte un orifice (9) pour le faisceau d'entrée et un orifice (8) symétrique au premier pour le faisceau réfléchi.

**11** **-** Dispositif suivant la revendication 10, caractérisé en ce que, lorsque la cassette (2) est enlevée, le trajet du faisceau d'entrée à travers l'ensemble du dispositif est entièrement libre de tout obstacle.

**12 -** Dispositif suivant l'une quelconque des revendications précédentes, caractérisé en ce qu'il comporte, près des moyens de réglage du dispositif d'orientation du miroir, des indications (36,37) illustrant le résultat, sur le rayon réfléchi, des manoeuvres desdits moyens de réglage.
